# EUROPEAN PATENT APPLICATION

(11) **EP 4 108 426 A1**
(43) Date of publication of application: **28.12.2022**
(21) Application number: 22180735.7
(22) Date of filing: 23.06.2022
(51) Int. Cl.: B29C 65/02, B29C 65/56, B29C 65/08, B29K 101/12, B29K 105/12

(54) **MODULAR THERMOPLASTIC COMPOSITE STRUCTURES**

(30) Priority: 23.06.2021 US 202163214057 P; 20.06.2022 US 202217844586
(71) Applicant: Arris Composites Inc., Berkeley CA 94710 (US)
(72) Inventor: Perkins, J. Scott, Oakland, 94607 (US); Escowitz, Ethan, Berkley, 94707 (US); Davidson, Erick, Piedmont, 94611 (US); Reese, Riley, Oakland, 94602 (US)
(74) Representative: Blumbach · Zinngrebe Patentanwälte PartG mbB

(57) **Abstract**

A method for bonding thermoplastic fiber-composite parts comprises providing surface texture on one or both parts being bonded, and/or providing both parts with engagement features. Such surface textures and engagement features have a specific geometry and fiber alignment that facilitate fibrous interlock between the two parts at a bonding interface via in-situ consolidation.

## Description

### Statement of Related Cases

This disclosure claims priority to U.S. Pat. App. SN 63/214,057 filed June 23, 2021, which is incorporated herein by reference.

### Field of the Invention

The present invention relates to the molding processes.

### Background

Composite materials used to form large structures, such as aerospace vehicles fuselages and wind turbines blades, have traditionally incorporated thermoset resins. The use of these resins is primarily attributable to a historically higher degree of performance and processing validation compared to thermoplastic resins. But of late, the use of thermoplastics is on the rise, and its consideration for large structural assemblies is prompted by its many advantages over thermosets.

As is relevant here, the primary advantage offered by thermoplastic-based composites for large structures, as compared to thermosets, is the lack of an irreversible cure cycle. Whereas thermosets necessarily undergo a chemical change (i.e., crosslinking) to yield a finished part, thermoplastics do not. Thermoplastics simply undergo physical change (i.e., melting and cooling), which is reversible. The implication of this, in the context of the fabrication of large structures, is that thermoset components must be assembled via mechanical fasteners, whereas thermoplastic components can be directly bonded together.

Significant disadvantages are associated with mechanical fastening. For example, fasteners are local stress concentrators, and must be therefore spaced at appropriate intervals to appropriately distribute stresses. Moreover, the quantity of fasteners required across a large part, such as an entire fuselage, presents a significant weight contribution, hindering fuel economy. Furthermore, fasteners are often failure-propagation points from which cracks propagate during fatigue loading of planes.

In contrast, thermoplastic components are bonded directly together to form a large structural assembly. Consequently, there is a relatively large surface area available for a bond interface, particularly in comparison to the small interface area associated with each fastener for thermoset structures. The relatively larger surface area results in less stress on the union. And with such reduced stress concentrations, the bonds between thermoplastics perform better in fatigue loading than fastener-coupled thermosets.

### Summary

Embodiments of the invention provide improved bond interfaces for thermoplastic components.

The prior art has primarily focused on bonding processes for assembling thermoplastic components into larger structures. Such processes include, for example, infrared heating, ultrasonic heating, and laser heating. For bonding, heating methods are accompanied by a pressure application, such as via a compaction roller, to entangle plasticized polymer chains along the heated interface.

The bond resulting from the union of thermoplastic components using such methods is resin rich. Specifically, negligible consolidation occurs along the interfacial surface during the melt phase with prior-art methods. In the absence of appreciable consolidation, there is no impetus for fibrous mixing. In other words, the fibers from the two thermoplastics components do not intermingle; rather, only polymer-chain entanglement of thermoplastic resin occurs.

The present inventors recognized that improved bonds can be created by enabling a fibrous interlock between the components being bonded. Some embodiments of the invention provide certain surface textures and engagement features, at the bond surfaces, which promote fibrous interlock when subjected to conventional bonding processes.

Such surface textures and engagement features have a specific geometry and fiber alignment that facilitate fibrous interlock via in-situ consolidation during bonding. It is notable that in the prior art, any consideration given to fiber alignment along the corresponding bond surfaces has only been in the context of the individual components, rather than the interface between them. Simply put, the prior art has not addressed the nature of the bond between thermoplastic components. The nature of that bond is the very focus of embodiments of the present invention.

In some embodiments described herein, discrete composite components are joined via sequential consolidation. For example, in some embodiments, there is a first consolidation to form individual components, and then a second consolidation of the interfacing elements (i.e., the aforementioned surface textures and/or engagement features). This method circumvents tooling limitations that prohibit certain geometries from being compression molded in a single molding cycle.

Robust bonds formed via the methods described herein are applicable to a wide range of large structural assemblies composed of thermoplastic composite components. Notable example embodiments include primary and secondary aerospace structures (e.g., wings, fuselage, cabin, etc.) and wind turbine blades. Achieving the fiber alignment necessary to enable such robust bonds is accomplished through existing processes developed by the inventors.

In some embodiments, the present invention provides a method bonding thermoplastic fiber-composite parts to one another by:
providing a first thermoplastic fiber-composite part having a first joining element, wherein the first joining element includes a first plurality of short fibers, the short fibers having a length less than 100 millimeters, and wherein an end of at least some of the short fibers of the first plurality is proximate to a bonding interface;
providing a second thermoplastic fiber-composite part, the second thermoplastic fiber-composite part having a second plurality of short fibers, and wherein an end of at least some of the short fibers of the second plurality is proximate to the bonding interface;
creating fibrous-entangled bonds at the bonding interface by applying volumetric strain to the first plurality of short fibers and the second plurality of short fibers.

Embodiments of the method may further comprise at least one of the following steps or features, in any (non-conflicting) combination, among others disclosed herein:
- wherein the short fibers have a length in a range between about 2 and about 40 millimeters;
- wherein the first joining element is a surface texture;
- wherein the first joining element is an engagement feature;
- wherein the first joining element is a surface texture and the first thermoplastic fiber-composite part includes a second joining element that is an engagement feature;
- wherein the second thermoplastic fiber-composite part has a joining element;
- wherein the joining element of the second thermoplastic fiber-composite part is at least one of a surface texture or an engagement feature;
- wherein the second thermoplastic fiber-composite part has two joining elements, one of which is a surface texture and the other of which is an engagement feature;
- wherein an open tool is used to constrain a first engagement feature of the first thermoplastic fiber-composite part and a second engagement feature of the second thermoplastic fiber-composite part;
- wherein first and second geometries of respective first and second engagement features facilitate integration of the first and second engagement features during volumetric strain;
- wherein during volumetric strain, the first geometry of first engagement feature directs a flow of short fibers from the first engagement feature toward the second engagement feature;
- wherein during volumetric strain, the second geometry of second engagement feature directs a flow of short fibers from the second engagement feature toward the first engagement feature;
- a sequential consolidation, wherein during a first consolidation, a first part and a second part is formed, wherein at least one the parts has a joining element, and during a second consolidation, the first part and the second part are joined to one another at the joining element;
- wherein a joining element is integral to a thermoplastic fiber-composite part, and explicitly excludes a fiber-composite rivet;
- wherein the consolidation is performed via compression molding;
- wherein the consolidation is performed via open-tool compression;
- wherein a first consolidation is performed via compression molding, and a second consolidation is performed via open-tool compression;
- wherein an existing bonding process is used to bond surface textures present on two thermoplastic fiber-composite parts, and consolidation is used to bond engagement features; and
- wherein when only one of two thermoplastic fiber-composite parts includes surface texture, the surface texture is maintained at a lower temperature than a bonding surface of the thermoplastic fiber-composite part not having surface texture.

### Brief Description of the Drawings

**FIG. 1A** depicts a mold cavity for a part, the mold cavity including a region for providing surface texture.
**FIG. 1B** depicts an assemblage of preforms situated in the mold cavity of FIG. 1A, in preparation for molding the part.
**FIG. 1C** depicts a part formed, via compression molding, from the assemblage of preforms shown in FIG. 1B, depicts exemplary fiber alignments throughout the part, and depicts surface texture on a portion of the part, in accordance with the present teachings.
**FIG. 1D** depicts the part of FIG. 1C and a second part, wherein the two parts are positioned for joining in accordance with an illustrative embodiment of the present invention.
**FIG. 1E** depicts detail of the intermingling of fibers from opposed surface texture regions of the two parts shown in FIG. 1D.
**FIG. IF** depicts a part resulting from bonding the two parts shown in FIG. 1D, and illustrates the intermingling of fibers from the surface texture regions of the two parts.
**FIG. 2A** depicts two parts positioned for joining in accordance with an illustrative embodiment of the present invention, wherein the two parts include complementary engagement features, and wherein an exemplary fiber alignment is shown.
**FIG. 2B** depicts a part resulting from the bonding of the two parts shown in FIG. 2A, and illustrates the mechanical mating of the engagement features and the intermingling of fibers from the engagement features.
**FIG. 3A** depicts an open tool for use in bonding the two parts of FIG. 2A
**FIG. 3B** depicts the open tool of FIG. 3A being used in conjunction with the two parts of FIG. 2A.
**FIG. 3C** depicts the open tool of FIG. 3A performing the second consolidation of a portion of the two parts of FIG. 2A to yield the single part of FIG. 2B.

### Detailed Description

*Definitions.* The following terms are defined for use in this description and the appended claims:
- **"Fiber"** means an individual strand of material. A fiber has a length that is much greater than its diameter.
- **"Fiber bundle"** means plural (typically multiples of one thousand) co-aligned fibers.
- **"Stiffness"** in the context of a material means resistance to bending, as measured by Young's modulus. When used in the context of a spring or spring assembly, "stiffness" means resistance to displacement from an unstretched/uncompressed state.
- **"Tow"** means a bundle of fibers (i.e., fiber bundle), and those terms are used interchangeably herein unless otherwise specified. Tows are typically available with fibers numbering in the thousands: a 1K tow (1000 fibers), 4K tow (4000 fibers), 8K tow, etc.
- **"Prepreg"** means fibers that are impregnated with resin.
- **"Towpreg"** means a fiber bundle (i.e., a tow) that is impregnated with resin.
- **"Preform"** means a segment of plural, co-aligned, resin-impregnated, typically same-length fibers. The segment is cut to a specific length, and, in many cases, will be shaped (e.g., bent, twisted, etc.) to a specific form, as appropriate for the specific part being molded. Preforms are usually sourced from towpreg (i.e., the towpreg is sectioned to a desired length), but can also be from another source of plural co-aligned, unidirectionally aligned fibers (e.g., from a resin impregnation process, *etc.).* Preforms are preferably, but not necessarily, substantially circular or oval in cross section. Applicant's use of the term "preform" explicitly excludes any size of shaped pieces of: (i) tape, (ii) sheets of fiber, and (iii) laminates. The modifier "fiber-bundle-based" or "aligned-fiber" may be pre-pended herein to the word "preform" to emphasize the nature of applicant's preforms and to distinguish them from prior-art preforms, which are typically in the form of tape, sheets, or shapes cut from sheets of fiber.
- **"Preform Charge"** means an assemblage of preforms that are at least loosely bound together (i.e., tacked) so as to maintain their position relative to one another. Preform charges can contain fiber in form factors other than that of fiber bundles, and can contain various inserts, passive or active. Preform charges are not fully consolidated during tacking.
- **"Preform Layup"** means an arrangement of individual preforms that is formed by placing preforms, one-by-one, into a mold cavity. A preform layup is distinguished from a preform charge, wherein for the latter, the preforms are at least loosely bound to one another and the assemblage thereof is usually formed outside of the mold cavity.
- **"Compatible"** means, when used to refer to two or more different resin materials, that the resins will mix and bond with one another.
- **"Compression molding"** is a molding process that involves the application of heat and pressure to feed constituents for a period of time. The mold constituents are typically placed in a female mold half having a mold cavity. As the requisite amount of feed constituents are placed in the female mold half, a second mold half -a male mold half- is joined to the female mold half to close the mold cavity. The male mold half usually includes features that extend into the female male half to engage the feed constituents therein. For applicant's processes, the applied pressure is usually in the range of about 500 psi to about 5000 psi, and temperature, which is a function of the particular resin being used, is typically in the range of about 150°C to about 400°C. Once the applied heat has increased the temperature of the resin above its melt temperature, it is no longer solid and will flow. The resin will then conform to the mold geometry via the applied pressure, and the feed constituents are thereby consolidated, resulting in very little void space. Elevated pressure and temperature are typically maintained for an amount of time ranging from about 30 seconds to a few minutes. After this compression molding protocol is complete, the mold is removed from the source of pressure and is cooled. Once cooled, a finished part is removed from the mold.
- **"Consolidate", "consolidating", or "consolidation"** means, in the present context, that in a grouping of fibers/resin, such as plurality of preforms, void space is removed to the extent possible and as is acceptable for a final part. Feed structures lose any unique or individual identity and any previously existing boundaries between adjacent preforms are lost. This usually requires significantly elevated pressure, either through the use of gas pressurization (or vacuum), or the mechanical application of force (e.g., rollers, etc.), and elevated temperature (to soften/melt the resin).
- **"Partial consolidation"** means, in the present context, that in a grouping of fibers/resin, void space is not removed to the extent required for a final part. As an approximation, one to two orders of magnitude more pressure is required for full consolidation versus partial consolidation. As a further very rough generalization, to consolidate fiber composite material to about 80 percent of full consolidation requires only 20 percent of the pressure required to obtain full consolidation.
- **"Neat"** resin or other matrix material means the resin/matrix material includes no reinforcing fibers.
- **"About"** or **"Substantially"** means +/- 20% with respect to a stated figure or nominal value.
- Other definitions may be provided elsewhere in this specification, in context.

It is to be understood that any numerical range recited herein is intended to include all sub-ranges encompassed therein. For example, a range of "1 to 10" is intended to include all sub-ranges between (and including) the recited minimum value of about 1 and the recited maximum value of about 10, that is, having a minimum value equal to or greater than about 1 and a maximum value of equal to or less than about 10. As a non-limiting example, a recited range of "1 to 10 µm" includes "5 to 8 µm", "1 to 4 µm", "2 to 9 µm", etc.

*Feed Constituents.* In accordance with the invention, an assemblage of preforms is positioned in a mold cavity. Preforms are typically formed from towpreg, but may also be sourced from the output of a resin impregnation line. To form a preform from towpreg or the output of a resin infusion line, the towpreg is cut into segments of a desired size and often shaped (e.g., bent, *etc.)* as well. Each preform include thousands of co-aligned, resin-infused fibers, typically in multiples of one thousand (e.g., 1k, 10k, 24k, etc.). A preform may have any suitable cross-sectional shape (e.g., circular, oval, trilobal, polygonal, *etc.),* but is most typically circular or oval.

As noted above, the preforms are organized into an assemblage. The assemblage has a geometry and shape that is close to that of the part being fabricated, or a portion thereof. In some embodiments, the preforms are placed one-by-one into the mold. In some other embodiments, the preforms are first organized into a "preform charge."

A preform charge includes a plurality of preforms that are "tacked" together. The term "tacking" references heating to the point of softening (but not melting) to effectively join the preforms so as to create a single structure. In some cases, minimal compression is applied for tacking. The preform charge, which is often created in a special fixture, conforms to the shape of the mold (and hence the part), or portions of it. Because the resin in the preforms is not heated to liquefication (the preforms are typically heated to a temperature that is above the heat deflection temperature of the resin, but below the melting point), and the applied pressure is typically low (less than 100 psig and in some cases nothing more than the force of "gravity" acting on the preforms), the preform charge is not fully consolidated and thus could not function as a finished part. But once joined in this fashion, the preforms will not move, thereby maintaining the desired geometry and the specific alignment of each preform in the assemblage. See, e.g., Publ. Pat. App. US2020/0114596 and U.S. Pat. 11,090,883.

As used herein, the term "assemblage of preforms" refers to either a lay-up of preforms, as formed by placing preforms one-by-one into a mold cavity, or to a preform charge.

As previously noted, a preform, as that term is used herein, is a bundle of resin-infused fibers. The individual fibers can have any diameter, which is typically, but not necessarily, in a range of 1 to 100 microns. The individual fibers can have any length, which is application specific, wherein the length results from the cutting operation that creates the associated preform. Individual fibers can include an exterior coating such as, without limitation, sizing, to facilitate processing, adhesion of binder, minimize self-adhesion of fibers, or impart certain characteristics (e.g., electrical conductivity, *etc.).*

Each individual fiber can be formed of a single material or multiple materials (such as from the materials listed below), or can itself be a composite. For example, an individual fiber can comprise a core (of a first material) that is coated with a second material, such as an electrically conductive material, an electrically insulating material, a thermally conductive material, or a thermally insulating material.

In terms of composition, each individual fiber can be, for example and without limitation, carbon, carbon nanotubes, glass, natural fibers, aramid, boron, metal, ceramic, polymer, synthetic fibers, and others. Non-limiting examples of metal fibers include steel, titanium, tungsten, aluminum, gold, silver, alloys of any of the foregoing, and shape-memory alloys. "Ceramic" refers to all inorganic and non-metallic materials. Non-limiting examples of ceramic fiber include glass (e.g., S-glass, E-glass, AR-glass, etc.), quartz, metal oxide (e.g., alumina), aluminasilicate, calcium silicate, rock wool, boron nitride, silicon carbide, and combinations of any of the foregoing. Non-limiting examples of suitable synthetic fibers include nylon (polyamides), polyester, polypropylene, meta-aramid, para-aramid, polyphenylene sulfide, and rayon (regenerated cellulose).

Any resin -thermoplastic or thermoset- that bonds to itself under heat and/or pressure can be used in conjunction with embodiments of the invention.

Exemplary thermoplastic resins useful in conjunction with embodiments of the invention include, without limitation, acrylonitrile butadiene styrene (ABS), ethylene tetrafluoroethylene (ETFE), fluorinated ethylene propylene (FEP), liquid crystal polymers (LCPs), polyamides (Nylon), polyaryletherketones (PAEK), polybenzimidazole (PBI), polybutylene terephthalate (PBT), polycarbonates (PC), and polycarbonate-ABS (PC-ABS), polyethylene (PE), polyetheretherketone (PEEK), polyetherimide (PEI), polyether sulfones (PES), polyethylene terephthalate (PET), perfluoroalkoxy copolymer (PFA), polyimide (PI), polymethylmethacrylate (PMMA), polyoxymethylene (polyacetals) (POM), polypropylene (PP), polyphosphoric acid (PPA), polyphenylene ether (PPE), polyphenylene oxide (PPO), polyphenylene sulfide (PPS), polyphenylsulfone (PPSU), Polystyrene (PS), polysulfone (PSU), polytetrafluoroethylene (PTFE), polyurethane (PU), polyvinyl chloride (PVC), styrene acrylonitrile (SAN), and styrene butadiene styrene (SBS). A thermoplastic can be a thermoplastic elastomer such as polyurethane elastomer, polyether ester block copolymer, styrenic block copolymer, polyolefin elastomer, polyether block amide, thermoplastic olefins, elastomeric alloys (TPE and TPV), thermoplastic polyurethanes, thermoplastic copolyesters, thermoplastic polyamides, and thermoplastic silicone vulcanizate.

In accordance with the present teachings, bond interfaces between thermoplastic components are implemented to possess fibrous entanglements. According to the present teachings, thermoplastic components are provided with certain surface textures and/or engagement features that are located near the bonding region on one or more of the composite components being joined. Such surface textures and engagement features are formed to have a specific fiber alignment and geometry, which promote the fibrous entanglement across bond interfaces. Such entanglement will occur when using bonding processes known to the art, as well as by sequential consolidation methods described herein.

Although prior-art processes for bonding thermoplastic components can yield consistent thermoplastic bonding, they do so via methods resulting in resinous bonds, not fibrous bonds. One exception to this is the use of thermoplastic composite rivets, which function similarly to metal rivets. Although the use of such rivets requires less thermal control than most bonding processes, the resulting "bonds" exhibit many of the same disadvantages as mechanical fasteners for thermosets (e.g., functioning as local stress concentrators, etc.), albeit to a lesser degree. Embodiments of the invention seek to avoid any such disadvantages, and specifically avoid and exclude the use of thermoplastic composite rivets.

The engagement features and textured surfaces on relevant parts are designed so that interfacial fibers will entangle via volumetric strain (i.e., consolidation) when subjected to bonding processes. Such consolidation is necessary for fibers to entangle across the interface, as the volumetric strain applies a motive force to displace fibers proximal to the interface. In the absence of volumetric strain, bonding processes known to the art will not displace fibers, and thus cannot achieve fibrous entanglement.

Thus, to create fibrous-entangled bonds, volumetric strain is applied to surface textures and engagement features having specific fiber alignments and, in some embodiments, a particular fiber length. Such textures and engagement features, hereinafter collectively referenced as **"joining elements,"** and are defined to explicitly exclude any type of rivets, are incorporated into relevant parts prior to bonding via molding methods developed by the inventors.

The fiber alignment and length of the joining elements are specified to maximally intermix, to the extent possible, displaced constituent fibers during bonding consolidation. The applied heat and pressure of the relevant bonding process causes volumetric strain along the interface, which in turn entangles the local fibers.

In some embodiments, joining elements include fibers having a length that is between about 2 to about 40 mm. Such fibers will "flow" when subjected to volumetric strain. Additionally, the end of such fibers that are closest to the part surface (i.e., the location of the interface) are oriented to be substantially parallel to the expected vector of volumetric strain. Fibers longer than 40 mm and less than about 100 mm tend not to flow as readily as shorter-length fibers, but will displace sufficiently under volumetric strain to achieve the desired entanglement.

Fibers longer than 100 mm have a limited ability to displace, as their length tends to anchor them in place. However, under sufficient volumetric strain and an appropriate joining geometry, it has been observed that the ends of such fibers will tend to entangle with the tips of fibers on the other side of bond interface. Thus, particularly for fibers longer than 100 mm, the surface-facing ends of fibers should be positioned substantially parallel to the consolidation direction. This facilitates entangling the tips of fibers on either side of the bond.

Some joining elements are relief or "surface" textures that are present on surface regions of the parts to be bonded. Such textures include, without limitation, patterned bosses, somewhat analogous to the dimples found on the surface of a basketball. The geometry of each such boss is small relative to the overall part; each boss has a major dimension of approximately 0.1-10 mm, and each boss is spaced apart further from its nearest neighbor than the aforementioned major dimension. Each boss will contain fibers as described above.

Volumetric strain occurring during bonding processes forces the bosses to displace radially, thereby filling the empty space between a given boss and adjacent bosses. As bosses on either side of the interface radially consolidate towards each other, their constituent fibers intermix and entangle. To the extent that bosses are present on two parts being joined together, interdigitating the bosses prior to joining will result in fibers from the two parts intermixing and entangling.

The short fibers in the surface texture will be longer (in the direction of volumetric strain) than the surface texture itself - typically a minimum of about 20 percent longer. Such fibers will therefore extend from the surface texture into the "main" portion of the (same) part, as well as entangling with the short fibers from the part being joined.

In some embodiments, surface textures can be present on a single part surface of a given bond interface. That is, the opposed surface from the other part being joined may omit such texture, as long as the other part has fibers of appropriate length and orientation to flow that are located near the interface. In such embodiments, the embossed texture is maintained at a lower temperature than the opposed surface during bonding. Such a temperature differential causes fibers along the opposed surface to flow into the embossed surface, which undergoes minimal volumetric strain due to its lower temperature.

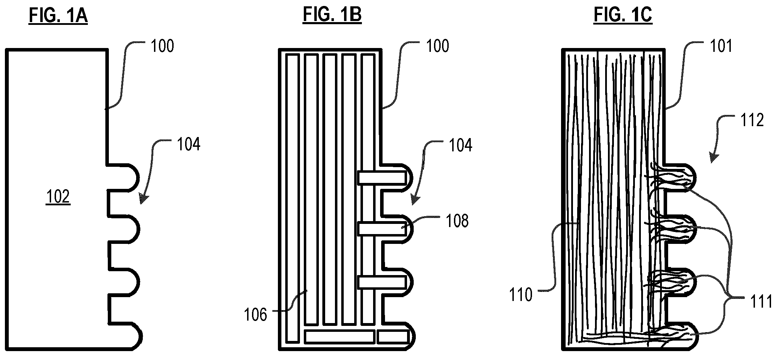

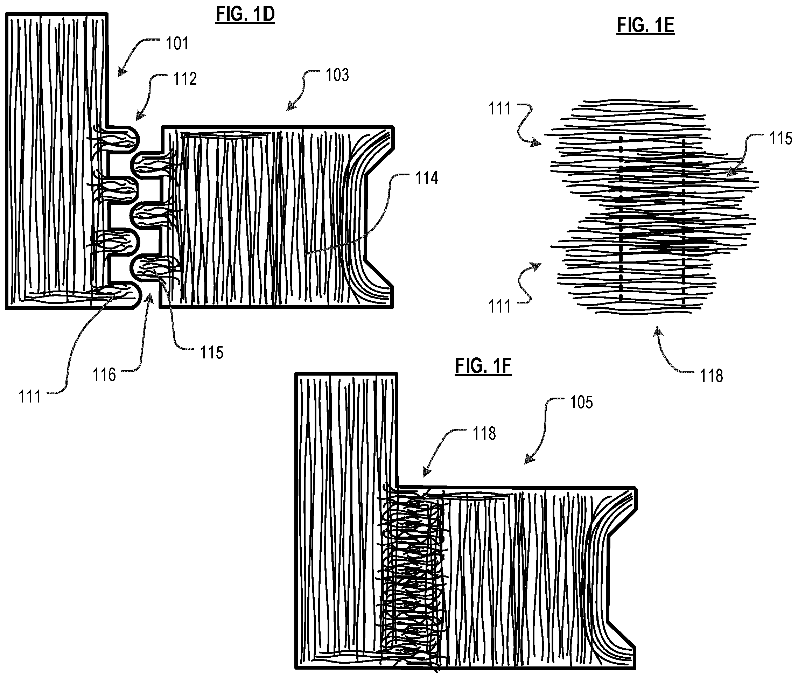

FIGs. 1A through 1E depict an embodiment wherein surface texture that is formed on two fiber-composite parts is used, during a bonding process, to create a part having a bond interface with fibrous entanglements, in accordance with the present teachings.

FIG. 1A depicts mold half **100** for use in forming a part, wherein the mold half **100** comprises a mold cavity for receiving molding constituents for molding the part. The mold cavity includes main region **102,** and surface region **104,** which is shaped to form a surface texture on the part.

FIG. 1B depicts an assemblage of fiber-bundle-based preforms within mold half **100.** Each such bundle includes thousands of resin-infused, co-aligned fibers. The fibers within a given preform are considered to be continuous; that is, the fibers are effectively the same length as their host preform. Relatively longer preforms **106** are sited in main region **102** of mold half **100.** Preforms **106** are aligned for best mechanical properties as a function of the anticipated in-use forces to which that region of the part will be subjected. Relatively shorter preforms **108** are situated near surface region **104.** The fibers from preforms **108** are suitably short (i.e., about 2 to about 40 mm) to flow under appropriate conditions of pressure and temperature. Preforms **108** are aligned such the fibers are substantially parallel to the expected vector of volumetric strain.

FIG. 1C depicts part **101** resulting from subjecting the assemblage of preforms **106/108** to compression molding operations. The alignment of fibers **110** in main region **102** and fibers **111** in surface texture **112** are depicted. This is a first consolidation for forming a fiber-composite part having surface texture for use in creating fibrous bonds.

FIG. 1D depicts part **101** as well as a second part **103** that is to be joined to part **101.** Like part **101,** part **103** includes surface texture **116** having fibers **115** aligned to be substantially parallel to the vector of volumetric strain. Other fibers **114** within part **103** are aligned for best mechanical properties as a function of the anticipated in-use forces to which that portion of the part will be subjected.

The respective surface textures **112** and **116** of respective parts **101** and **103** are brought into contact, constrained, and subjected to conventional bonding methods for thermoplastics (previously mentioned). Such methods include the application of a sufficient amount of heat/energy to melt the resin, and at least some amount of consolidating pressure. As a result, parts **101** and **103** bond together forming part **105,** depicted in FIG. IF. FIG. 1E depicts detail of interface region **118,** depicting the intermingling of fibers **111** and **115** from respective surface textures **112** and **116** of original parts **101** and **103.**

Although the embodiment depicted in FIGs. 1A-1E depict surface texture of both of the parts being joined, in some other embodiments, such surface texture is present on only one of the parts. However, in such embodiments, the part that does not possess surface texture should have suitably short fibers (i.e., less than 100 mm, and more preferably having a length in a range of about 2 to about 40 mm) at the region that will contact the surface texture of the other part (i.e., the interface between the parts). This ensures that such fibers will flow during consolidation, and intermingle with the fibers in the surface texture region of the other part.

A second type of joining element is a "sacrificial" engagement feature, which is typically larger, and located with greater specificity than the aforementioned surface textures. Unlike a rivet, which itself sacrificially consolidates to act as a fastener, engagement features in accordance with the present teachings are actually present in the geometry of the parts being assembled. The engagement feature undergoes volumetric strain, causing the fibers of the feature to entangle with fibers of a corresponding engagement feature on the other part being joined. The engagement feature may be referred to as "sacrificial" since the geometry of the engagement feature of at least one of the parts being joined is not maintained during joinder of the parts.

As previously noted, subjecting a sacrificial engagement feature of a part to volumetric strain, as opposed to doing the same thing to a fastener (e.g., rivets), results in a bond that transfers stress more effectively. This is attributable to the fact that fibers within the engagement feature are either continuous or substantially overlapping into the greater volume of the part. Moreover, the sacrificial engagement feature will yield more area for bonding than a fastener such as a rivet. Thus, fibrous integration between engagement features and the rest of a part (1) minimizes stress concentrations to the extent possible and (2) leverages the advantages of anisotropy.

The specified geometry of an engagement feature is somewhat analogous to an explosive charge. Upon detonation, the shape of the explosive charge is designed to direct its energy in a particular direction, thereby focusing the explosive effect as desired. Engagement features are shaped such that the volumetric strain they undergo during bonding advantageously directs fiber flow towards the complementary engagement feature.

A surface-texture-based joining element, as described above, can be readily used in conjunction with existing bonding processes. The applicability of conventional bonding processes to the sacrificial engagement-feature-based joining elements is, however, more problematic. In some embodiments, such features may introduce too much geometric complexity and volumetric strain to be compatible with existing bonding methods. A standard ultrasonic welding horn, for example, may be too large to access a given sacrificial feature and consequently be unable to apply sufficient pressure for consolidation of the bond. However, a specifically shaped horn and increased pressure might be sufficient. Thus, although existing methods of energy transfer are, at least in principle, viable for use in conjunction with embodiments of the invention, tooling and processing will often require tailoring to the specific engagement-feature-based joining element.

As a consequence of the foregoing, and in accordance with the present teachings, sequential consolidation methods have been developed to assemble components having engagement-feature-based joining elements. Unlike a rivet, which itself plastically deforms to secure components that do not deform, the engagement features that fibrously interlock through consolidation, also unify components through local deformation. The present sequential consolidation methods ensure this locality, in addition to providing conditions necessary (i.e., heat and pressure) for the specified volumetric strain.

A given component, having been previously molded with appropriate engagement features, is first registered, in a fixture, to another component with complementary engagement features. Once the components and their cooperating engagement features are situated properly relative to one another, the sequential consolidation process applies heat, pressure, and geometric constraint to both features simultaneously. Applied heat and pressure cause the features to consolidate, while the geometric constraint causes them to do so such that their volumetric strain vector results in fibrous interlock with one another. In view of the greater magnitude of volumetric strain to form bonds using engagement features, this sequential consolidation method can yield higher-strength unions than surface-texture-based joining elements.

An apparatus to supply the heat, pressure, and geometric constraint, as required by the sequential consolidation method, can manifest in a variety of forms, as suited to various embodiments. Heat can be applied via convective, conductive, or radiative sources. Applied pressure can be provided by a controlled source of force, such as electromechanical, pneumatic, hydraulic, ultrasonic, *etc.* The source of force applies pressure on the heated sacrificial features by actuating the constraint component, analogous to how a compression press applies force to a tool (a constraint component) to mold a part.

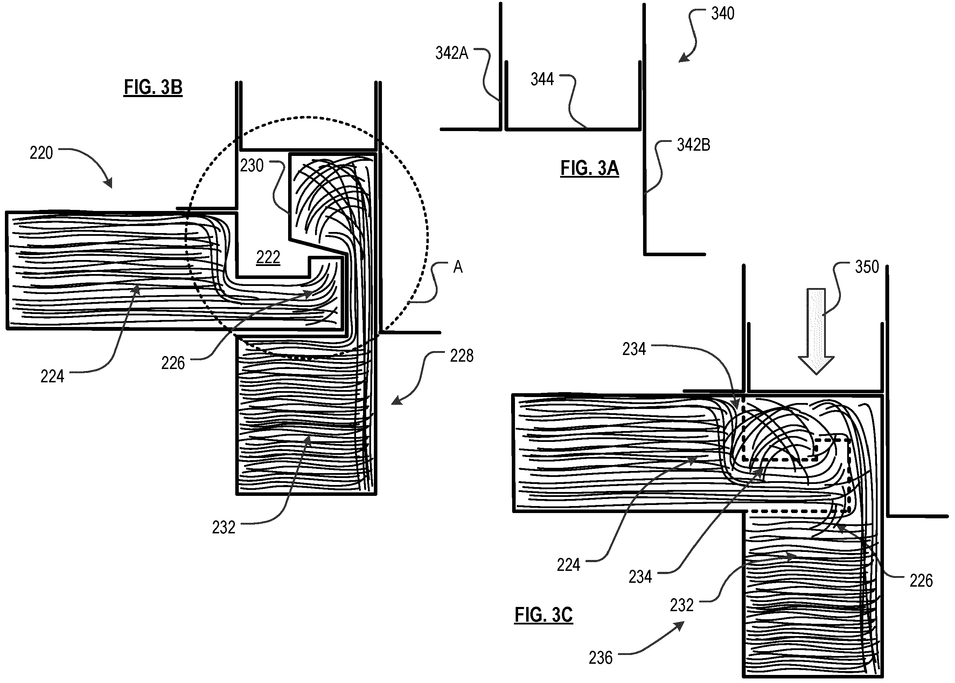

But unlike a tool involved in molding a part, the constraint component does not completely bound the surrounding material, but rather only the features being consolidated. The open-tool nature of the constraint component is necessary for geometric compatibility. That is, since any two components being bonded are presumably distinct geometries due to moldability constraints, their union thus cannot be molded with a closed tool. By functioning as an open tool, the constraint component can form fibrous bond geometry that would not otherwise be possible to fabricated in a single shot in a closed tool. FIG. 3, discussed further below, depicts an open-tool constraint component.

Considering the volumetric strain, and resulting viscous flow of resin and fiber occurring during the sequential consolidation process, use of an open constraint component presents the undesirable possibility of flowing material escaping the constraint component. This risk is mitigated by purposeful selection of processing parameters and sacrificial feature geometry. The sacrificial features and constraint component are designed to promote inward flow directions, to direct material away from the constraint-component opening, as well as to promote fibrous mixing. Processing parameters are selected to apply pressure gradually and keep temperatures low in order to keep viscosity high.

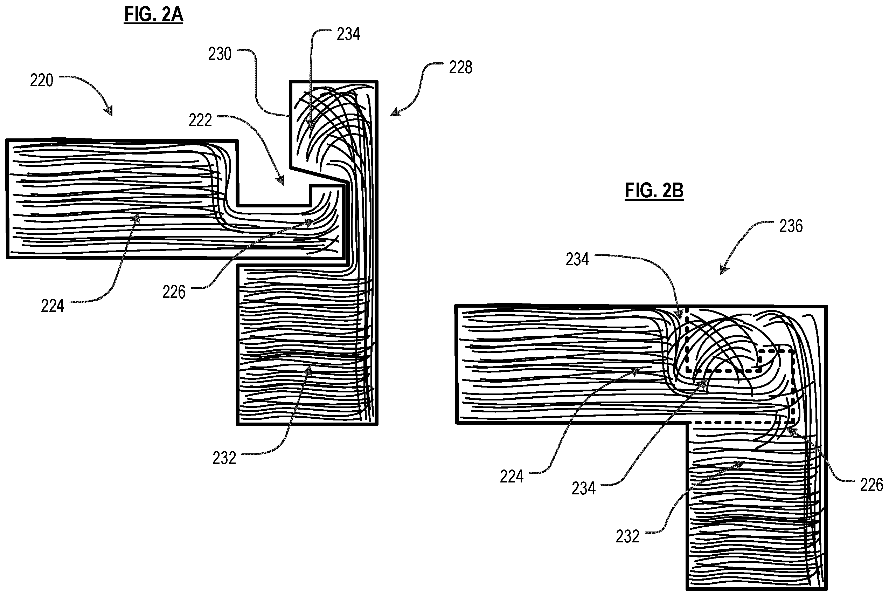

FIG.2A depicts two fiber-composite parts **220** and **228,** having respective engagement features **222** and **230.** Engagement **230** is a "sacrificial" engagement feature, since it's geometry will not be maintained after joinder. The parts are positioned to be joined in accordance with the present teachings.

In part **220,** long fibers **224** are aligned for best mechanical performance in view of the expected in-use forces on the resulting part. Short fibers **226** (i.e., less than 100 mm) are situated near engagement feature **222.** In part **228,** relatively longer fibers are aligned for best mechanical performance in view of the expected in-use forces on the resulting part. Short fibers **234,** situated in sacrificial engagement feature **230,** are present in part **228** as well.

With the application of energy/heat, constraint, and consolidating force, sacrificial engagement feature **230** of part **228** is forced into engagement feature **222** of part **220.** The union of these parts, which is part **236,** is depicted in FIG. 2B. The interfacial region is depicted as a "dotted" line in FIG. 2B. Notable are fibers **234** (sourced from sacrificial engagement feature **230)** entangling with fibers **224** of original part **220** across the interfacial region, and fibers **226** (sourced from engagement feature **222)** entangling with fibers **232** of original part **228** across the interfacial region.

FIGs. 3A through 3C depict an example of an open tool for use as a constraint component for effecting joinder of fiber-composite parts **220** and **228** of FIG. 2A to form part **236** of FIG. 2B.

FIG. 3A depicts open tool **340** having static constraint elements **342A** and **342B,** and movable/actuatable constraint element **344.** In the illustrative embodiment, the static constraint elements **342A** and **342B** are distinct elements; in some embodiments, the static constraint element can be a single element. Open tool **340** is specifically adapted for use with parts **220** and **228,** and is designed so that it only constrains those regions of the parts subject to secondary consolidation, as indicated within region A (FIG. 3B). More particularly, the portions of parts **220** and **228** outside of region A are not constrained and will not experience volumetric strain. Actuatable constraint element **344** can be, for example, a plunger or other element that can be used to apply pressure to one or more of the engagement features, such as via any of the previously discussed controlled sources of force. In this example, actuatable constraint element **344** is heated, and so applies pressure and heat to sacrificial engagement features **230.** Static constraint element **342** provides a cavity for guiding the movement of actuatable constraint element **344** as well as constraining the requisite portions of the parts during secondary consolidation. Referring to FIG. 3C, as heat and pressure **350** are applied by actuatable constraint element **344,** sacrificial engagement feature **230** is pressed into engagement feature **222,** distorting as this occurs. Due to their orientation and size, fibers within sacrificial engagement feature **230,** such as short fibers **234,** intermingle with fibers **224** and **226** of original part **220.**

Sequential consolidation processes and existing bonding processes are not mutually exclusive, nor are textured-surface-based and engagement-feature-based joining elements. For example, in a given embodiment, the interfacing regions of two components in an assembly can be composed of textured surfaces in certain areas and engagement features in others. An existing bonding process can first create a fibrous bond between the textured surfaces, followed by sequential consolidation processes to unify the engagement features. In other embodiments, the sequential consolidation processes can be performed in tandem, such as by an extended constraint component capturing multiple feature sets, for process efficiency.

It is to be understood that the disclosure describes a few embodiments and that many variations of the invention can easily be devised by those skilled in the art after reading this disclosure and that the scope of the present invention is to be determined by the following claims.

## Claims

1. A method for bonding thermoplastic fiber-composite parts to one another, the method comprising:
providing a first thermoplastic fiber-composite part having a first joining element, wherein the first joining element includes a first plurality of short fibers, the short fibers having a length less than 100 millimeters, and wherein an end of at least some of the short fibers of the first plurality is proximate to a bonding interface;
providing a second thermoplastic fiber-composite part, the second thermoplastic fiber-composite part having a second plurality of short fibers, and wherein an end of at least some of the short fibers of the second plurality is proximate to the bonding interface;
creating fibrous-entangled bonds at the bonding interface by applying volumetric strain to the first plurality of short fibers and the second plurality of short fibers.

2. The method of claim 1 wherein the short fibers of the first plurality have a length in a range between about 2 millimeters and about 40 millimeters.

3. The method of claim 2 wherein the first joining element is a surface texture disposed at the bonding interface.

4. The method of claim 3 wherein the surface texture comprises a plurality of bosses, each boss having a largest dimension in a range of about 0.1 to about 10 millimeters, and spaced apart from a nearest boss by a distance greater than the largest dimension of the boss.

5. The method of claim 3 or 4 wherein applying volumetric strain comprises applying heat and pressure to the first plurality of short fibers and the second plurality of short fibers, and wherein creating fibrous-entangled bonds comprises maintaining the first plurality of short fibers at a lower temperature than the second plurality of fibers.

6. The method of claim 3, 4 or 5 wherein the second thermoplastic fiber-composite part has a second joining element that includes the second plurality of short fibers, the short fibers having a length in a range between about 2 millimeters and about 40 millimeters, and wherein the first joining element and the second joining element interface with one another due to the applied volumetric strain.

7. The method of claim 6 wherein the second joining element comprises a plurality of bosses, each boss having a largest dimension in a range of about 0.1 to about 10 millimeters, and spaced apart from a nearest boss by a distance greater than the largest dimension of the boss.

8. The method of any of claims 1 to 7 wherein the second thermoplastic fiber-composite part has a second joining element, wherein the second joining element includes the second plurality of short fibers, the short fibers having a length less than 100 millimeters, and wherein the first joining element and the second joining element interface with one another due to the applied volumetric strain.

9. The method of claim 8 wherein the short fibers of the second plurality have a length in a range between about 2 millimeters and about 40 millimeters.

10. **The** method of claim 9 wherein the second joining element is a surface texture disposed at the bonding interface.

11. The method of claim 10 wherein the surface texture comprises a plurality of bosses, each boss having a largest dimension in a range of about 0.1 to about 10 millmeters, and spaced apart from a nearest boss by a distance greater than the largest dimension of the boss.

12. The method of any of claims 1 to 11 wherein the first thermoplastic fiber-composite part comprises:
a first engagement feature that is an integral portion of the first thermoplastic fiber-composite part, wherein the first engagement feature includes (i) relatively long fibers that extend from the first engagement feature into a main body of the first thermoplastic fiber-composite part, and (ii) relatively short fibers having a length less than 100 millimeters; and
a second engagement feature that is an integral portion of the second thermoplastic fiber-composite part, wherein the second engagement feature includes (i) relatively long fibers that extend from the second engagement feature into a main body of the second thermoplastic fiber-composite part, and (ii) relatively short fibers having a length less than 100 millimeters, wherein
the first engagement feature has a first geometry and the second engagement feature has a second geometry, and wherein, when at least one of the first and second engagement features is subjected to volumetric strain:
(a) the respective first and second geometry thereof facilitate integration of the first and second engagement features; and
(b) the respective first geometry and the second geometry thereof direct a flow of the relatively short fibers from the at least one first or second engagement feature toward the other of the second or first engagement feature.

13. The method of claim 12 wherein applying volumetric strain comprises applying heat and pressure to both the first engagement feature and the second engagement feature, and constraining the first engagement feature and the second engagement feature.

14. The method of claim 13 wherein constraining comprises engaging an open tool to the first engagement feature and the second engagement feature, the open tool including a static constraint element and an actuatable constraint element.
